# EUROPÄISCHE PATENTANMELDUNG

(11) **EP 1 154 177 A2**
(43) Veröffentlichungstag der Anmeldung: **14.11.2001**
(21) Anmeldenummer: 01108336.7
(22) Anmeldetag: 03.04.2001
(51) Int. Cl.: F16K 15/06

(54) **Rückschlagventil**

(30) Priorität: 12.05.2000 DE 10023398; 23.08.2000 DE 10041324
(71) Anmelder: RICHARD VOSS GRUBENAUSBAU GMBH, 58239 Schwerte (DE)
(72) Erfinder: Voss, Wolfgang, 58239 Schwerte (DE)
(74) Vertreter: Schulte, Jörg, Dipl.-Ing.

(57) **Zusammenfassung**

Ein insbesondere für den untertägigen Steinkohlenbergbau vorgesehenes, weil sehr sicher und mit hohen Standzeiten arbeitendes Rückschlagventil 1 verfügt über einen über den Steuerkolben 6 beeinflussten Ventilkolben 10, der gegen die Kraft einer Ventilfeder 12 in einer Hülse 18 angeordnet ist. Diese Hülse 18 verfügt über einen Innenraum 19, der mit dem Wasserdurchflussspalt 35 und damit mit der Gehäusebohrung 8 durch eine Verbindungsbohrung 25 in Verbindung steht. Dadurch wird eine hydraulische Dämpfung erreicht, die zusammen mit der Ausbildung des Ventilkolbens 10 als Kunststoffkolben für hohen Standzeiten Garantie gibt.

## Beschreibung

Die Erfindung betrifft ein Rückschlagventil, insbesondere für den hydraulischen Ausbau im untertägigen Steinkohlenbergbau mit einem mehrere Anschlüsse aufweisen den Gehäuse, in dem ein Steuerkolben und ein axial dazu angeordneter Ventilkolben verschieblich untergebracht sind, wobei der Steuerkolben bei entsprechender Steuerdruckbeaufschlagung den Ventilkolben gegen die Kraft einer Ventilfeder aus dem Dichtsitz herausschiebend ausgebildet ist.

Sogenannte entsperrbare Rückschlagventile sind in der Industrie weit verbreitet im Einsatz, wobei ihre Hauptaufgabe die ist, den Rückfluss der Hydraulikflüssigkeit aus einem entsprechend gefüllten Raum zu unterbinden. Dabei wird mit Hilfe eines Steuerkolbens der entsprechende Ventilkolben dann aus seiner Dichtposition herausgeschoben, wenn die beispielsweise in einem Hydraulikstempel anstehende Hydraulikflüssigkeit aus diesem herausgelassen oder herausgepumpt werden soll. Hierzu wird der Steuerkolben mit der Hydraulikflüssigkeit beaufschlagt, sodass er den Ventilkolben gegen die Kraft der Ventilfeder aus dem Dichtsitz herausdrücken kann. Zur Verbesserung der Abdichtung ist es bekannt, dem Ventilkolben einen Kunststoffaufsatz zuzuordnen, der am Dichtsitz des Ventils bzw. der Gehäusebohrung anliegt. Solche Kunststoffaufsätze werden in der Regel mit dem aus Messing o. ä. Metall bestehenden Ventilkolben aufgeschraubt und dann mit einer O-Ring-Dichtung versehen, um das Eindringen oder Durchdringen der Hydraulikflüssigkeit in den Bereich hinter dem Dichtsitz auszuschließen. Aufgrund der häufig auftretenden Lastwechsel kommt es bei diesen entsperrbaren Rückschlagventilen häufig zu Undichtigkeiten, weil sich der Kunststoffaufsatz löst und dann die notwendige Dichtigkeit nicht mehr gewährleistet ist. Der entsprechende Kunststoff führt zwar zu einem vorteilhaften Abdichteffekt im Bereich des Dichtsitzes und trägt auch zu einer gewissen Dämpfung bei, kann aber eben die beschriebenen Nachteile nicht verhindern, vielmehr muss das Ventil häufig ausgewechselt werden, was insbesondere im untertägigen Bergbau eine erhebliche Belastung und letztlich sogar Gefährdung darstellt.

Der Erfindung liegt daher die Aufgabe zugrunde, ein entsperrbares und zugleich gedämpft wirkendes Rückschlagventil mit hoher Standzeit zu schaffen.

Die Aufgabe wird gemäß der Erfindung dadurch gelöst, dass der Ventilkolben in einer in der Gehäusebohrung angeordneten Hülse gegen die Kraft der Ventilfeder verschieblich positioniert ist, wobei die Hülse eine Wasserfüllung aufweist und nur eine regulierte Verbindung des Innenraums zur Gehäusebohrung zulassend ausgebildet ist.

Gemäß der Erfindung ist die in der Gehäusebohrung angeordnete Hülse mit Wasser gefüllt, sodass beim schnellen Beaufschlagen des Steuerkolbens nicht nur die Ventilfeder beeinflusst werden muss, sondern auch das in der Hülse anstehende Wasser muss über die "Undichtigkeiten" in die Gehäusebohrung abgedrückt werden. Dabei stellen sich die "Undichtigkeiten" als eine Art Drossel dar, sodass eine entsprechende gezielte Dämpfung erreicht ist. Bei dieser Ausführung ist sichergestellt, dass auch bei hohen Standzeiten dennoch ein hydraulisch gedämpftes Rückschlagventil geschaffen ist, das wie üblich über die Hydraulikflüssigkeit entlastet werden kann. Die Rückstellfeder sorgt dann dafür, dass die Wasserfüllung in der Hülse wieder vervollständigt wird, weil in den entstehenden Hohlraum aus der Gehäusebohrung das benötigte Wasser hineingesaugt wird.

Nach einer zweckmäßigen Weiterbildung der Erfindung ist vorgesehen, dass der Innenraum der Hülse gegenüber der Kolbenaußenwand abgedichtet, gegenüber der Gehäusebohrung aber einen Wasserdurchflussspalt belassend ausgebildet ist und im Boden eine regulierende Verbindungsbohrung aufweist. Hier übernimmt die Verbindungsbohrung die Funktion einer Drossel, während der verbleibende Wasserdurchflussspalt ergänzend dazu wirkt. Die Verbindungsbohrung reguliert aufgrund ihrer Bemessung den Durchfluss des Wassers beim Herausheben des Ventilkolbens aus dem Dichtsitz, sodass die gezielte Dämpfung wie schon erwähnt sichergestellt ist.

Eine andere Möglichkeit der Dämpfung erreicht man dann, wenn der Innenraum der Hülse einen geschlossenen Boden aufweist, dafür aber zwischen Kolbenaußenwand und Hülseninnenwand einen Wasserdurchflussspalt belassend ausgebildet ist. Bei dieser Ausführung wird das in dem Hohlraum zwischen Hülse und Ventilkolben anstehende Wasser durch den Wasserdurchflussspalt in die Gehäusebohrung hineingepresst, sodass das Herausheben des Ventilkolbens aus dem Dichtsitz ganz sanft und langsam erfolgen kann. Umgekehrt wird über diesen Wasserdurchflussspalt das Wasser dann auch in den Hohlraum wieder hineingesaugt, wenn die Ventilfeder den Ventilkolben in den Dichtsitz zurückdrückt. Jedwedes Flattern des Ventils ist ausgeschlossen.

Denkbar ist es darüber hinaus auch, dass der Wasserdurchflussspalt zwischen Kolbenaußenwand und Hülseninnenwand und/oder der andere Wasserdurchflussspalt und die Verbindungsbohrung vorgesehen sind. Dies bedeutet, dass auch alle drei "Drosseln" Anwendung finden können, wenn dies aus entsprechenden Gründen sich als zweckmäßig herausstellt.

Die vorliegende Erfindung wird dadurch optimiert, dass das Gehäuse und auch die Hülse aus Messing oder Stahl hergestellt sind und dass der Ventilkolben aus einem korrespondierenden Material besteht. Hiermit soll insbesondere im Bereich des Dichtsitzes für eine schnelle und wirksame Abdichtung Sorge getragen werden, wobei es auch denkbar ist, dass der Ventilkolben nur über eine entsprechende Beschichtung verfügt, die mit dem Material des Gehäuses bzw. der Hülse korrespondiert.

Als besonders zweckmäßig hat sich herausgestellt, dass der Ventilkolben als Kunststoffkolben ausgebildet ist, insbesondere aus einen Hartkunststoff. Diese Kombination von Messing/Stahl bzw. Hartkunststoff gewährleistet das optimale Abdichten im Bereich des Dichtsitzes, ohne dass die Gefahr besteht, dass sich das die Dichtfläche aufweisende Bauteil des Ventilkolbens von diesem selber löst. Eine entsprechende Gefahr besteht, wenn der Kolben nur mit Kunststoff beschichtet ist. Von daher sollte er ganz aus Kunststoff bestehen. Auch andere Beschichtungen sind denkbar, dann aber eben nicht aus Kunststoff.

Nach einer weiteren zweckmäßigen Ausbildung der Erfindung ist vorgesehen, dass der Ventilkolben mit einer die Ventilfeder teilweise aufnehmenden Sackbohrung ausgerüstet ist. Diese Sackbohrung nimmt zunächst einmal die Ventilfeder sicher auf und sorgt dafür, dass sich diese durch Überlastung nicht nachteilig verformen kann. Darüberhinaus bildet dann der verbleibende Boden des Ventilkolbens eine Art Blocksicherung für die Feder auf, weil er ein zu weites Einschieben des Ventilkolbens in die Hülse verhindert.

Eine weitere zweckmäßige Ausbildung ist die, bei der die am Dichtsitz anliegende Dichtfläche des Ventilkolbens spitz zulaufend und in einer kegelspitzenförmigen Bohrung des Ventilkolbens und Steuerkolben verbindenden Stößels geführt ausgebildet ist. Damit ist der Ventilkolben quasi doppelt geführt, einmal durch die Hülse und zum anderen im Bereich der Spitze durch den Stößel, sodass es zu ungleichmäßigen Bewegungen des Ventilkolbens beim Ansprechen des Ventils oder aber beim Öffnen des Rückschlagventils nicht kommen kann.

Um einen genauen Sitz der Spitze des Ventilkolbens im Stößel sicherzustellen, ist vorgesehen, dass die kegelspitzenförmige Bohrung im Stößel in eine Kurzsackbohrung übergehend ausgeführt ist, sodass immer eine ausreichende Reibung zwischen Stößel und Spitze des Ventilkolbens gegeben ist und damit ein versehentliches Herausrutschen oder Herausbewegen verhindert wird. Die Kurzsackbohrung dient im Übrigen auch noch dazu, ein Schwimmen beim Einschieben des Ventilkolbens in die kegelspitzenförmige Bohrung zu verhindern, weil sich kein Film im Berührungsbereich bzw. im Flächenbereich einstellen kann, weil das evtl. vorhandene Wasser automatisch in die Kurzsackbohrung hineingedrückt wird.

Die ausreichende Stabilität des Stößels auch im Vebindungsbereich zwischen Ventilkolben und Stößel ist gegeben, weil der Stößel sich im Bereich der kegelspitzenförmigen Bohrung trompetenförmig erweiternd ausgebildet ist. Die entsprechende Bohrung schwächt den Stößel somit keineswegs. Vielmehr ist ein gezielter Übergang zwischen Stößel und der Spitze des Ventilkolbens gegeben.

Weiter vorne ist herausgestellt worden, dass der Innenraum der Hülse gegenüber dem Ventilkolben abgedichtet ist. Dies erreicht man gemäß der Erfindung dadurch, dass in der Kolbenaußenwand und/oder in der Hülseninnenwand eine einen O-Ring aufnehmende Ringnut ausgebildet ist. Diese Ringnut und der O-Ring sorgen also für die entsprechende Abdichtung und zwar auch dann, wenn der Ventilkolben verfahrensbedingt in die Hülse eingeschoben wird. Es ist immer eine wirksame Dichtung über den O-Ring gewährleistet.

Um die bleibende Abdichtung zu gewährleisten, d. h. auch dann, wenn der Ventilkolben relativ weit aus der Hülse herausgeschoben ist, sieht die Erfindung vor, dass die Ringnut zum Kolbenboden mit Sackbohrung des Ventilkolbens hin orientiert angeordnet ist. Insbesondere ist der Abstand zwischen dem "Boden" des Ventilkolbens auf 1 bis 3 mm begrenzt. Üblich sind solche Abstände um oder über 5 mm, wobei der engere Abstand die beschriebenen Vorteile mit der notwendigen Sicherheit mitsichbringt.

Die gewünschte hydraulische Dämpfung wird dadurch erreicht, dass der Innenraum der Hülse mit Wasser gefüllt ist, das nur über die Verbindungsbohrung im Boden der Hülse herausgedrückt bzw. umgekehrt auch wieder hineingesaugt werden kann. Zur Erleichterung der Montage ist dabei vorgesehen, dass die Gehäusebohrung hülsenseitig ein Innengewinde für einen Manometeranschluss oder einen Stopfen aufweist. Dieser Stopfen oder der Manometeranschluss sorgt für eine Abdichtung in diesem Bereich, sodass die Wirksamkeit der hydraulischen Dämpfung gewährleistet ist, d. h. Undichtigkeiten des Ventils sind sicher vermieden.

Der ja immer noch notwendige Austausch der Wasserfüllung des Innenraums der Hülse zur Gehäusebohrung bzw. den entsprechenden Anschlüssen hin ist gewährleistet, weil die Verbindungsbohrung in der Hülse einen Durchmesser von 0,6 bis 1,5 mm, vorzugsweise von 1,2 mm aufweist. Dabei sieht der Boden der Hülse darüberhinaus einen Verbindungskanal vor, der ein Abfließen oder Zufließen von Wasser in Richtung Innenraum des Ventilkolbens möglich bzw. optimiert möglich macht. Hier haben Versuche gezeigt, dass der beschriebene Durchmesser der Verbindungsbohrung mit 1,2 mm optimal ist, um die Dämpfungswirkung zu gewährleisten, aber eine Behinderung gleichzeitig auszuschließen. Die entsprechende Verbindungsbohrung, der Verbindungskanal und der um die Hülse verbleibende Wasserdurchflussspalt gewährleisten den gezielten Austausch der Wasserfüllung.

Um einen ausreichenden oder besser gesagt auch einen ausreichenden Wasserdurchflussspalt zu gewährleisten, schlägt die Erfindung vor, dass die Hülsenaußenwand und die Innenwand der Gehäusebohrung einen Wasserdurchflussspalt zulassend zueinander korrespondierend, vorzugsweise unbearbeitet belassen ausgebildet sind. Überraschend ergibt sich dabei ein Spalt um die Hülse herum von rund 22 mm, sodass der notwendige Austausch des Wassers gesichert ist.

Die Erfindung zeichnet sich insbesondere dadurch aus, dass ein Rückschlagventil geschaffen worden ist, bei dem hohe Standzeiten gewährleistet sind, weil der Ventilkolben so ausgebildet und ausgeführt ist, dass im Bereich des Dichtsitzes immer ein vollständiger Abschluss einstellt, ohne dass es zu einer Beschädigung des Ventilkolbens kommen kann. Der Ventilkolben selber ist gedämpft so angeordnet, dass nicht nur die Ventilfeder, sondern auch die entsprechende Wasserfüllung für ein gleichmäßiges Gleiten, d. h. Öffnen und Schließen des Ventilkolbens Sorge tragen. Der Ventilkolben selbst ist einmal in der Hülse und zum anderen im Stößel und damit im Steuerkolben geführt angeordnet, sodass sich eine sehr gleichförmige Bewegung des Ventilkolbens erreichen lässt, was mit zu den hohen Standzeiten derartiger Ventile beiträgt. Vorteilhaft ist weiter, dass die "Undichtigkeit" bzw. die gezielte "Undichtigkeit" durch eine "Drossel" sowohl zwischen Ventilkolben und Hülse wie auch zwischen Hülse und der Gehäusebohrung oder auch an beiden Bereichen vorgesehen werden kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein Rückschlagventil in vereinfachter Darstellung im Schnitt,
- Figur 2: eine Hülse vom Boden her gesehen,
- Figur 3: eine Hülse im Längsschnitt und
- Figur 4: einen Ventilkolben im Längsschnitt.

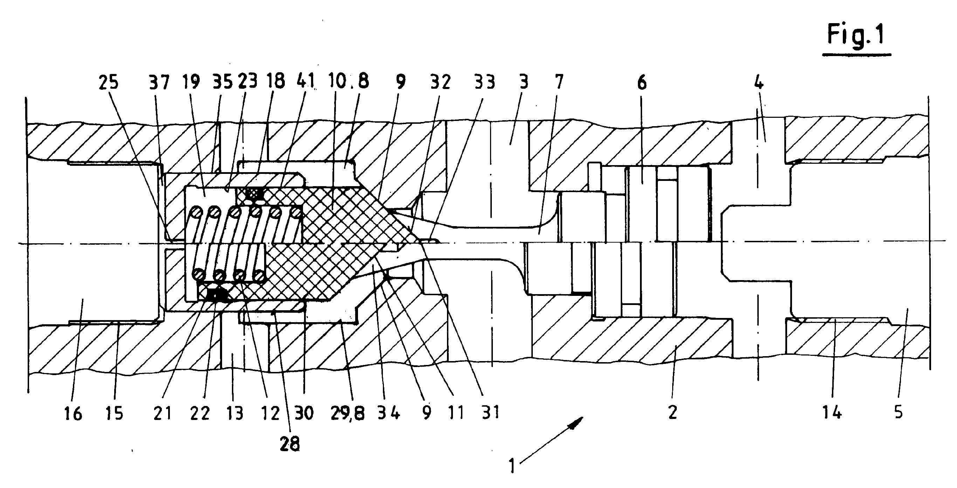

Figur 1 zeigt in vereinfachter Wiedergabe ein Rückschlagventil 1, dessen Gehäuse 2 lediglich angedeutet ist. Dieses Gehäuse 2 verfügt über mehrere Anschlüsse 3, 4 sowie über den Steuerdruckanschluss 5, über den die notwendige Hydraulikflüssigkeit oder sonstige Initiatorflüssigkeit an den Steuerkolben 6 herangeführt wird.

Dieser Steuerkolben 6 ist über einen Stößel 7 mit dem Ventilkolben 10 verbunden, sodass beide gleichförmig in der Gehäusebohrung 8 des Gehäuses 2 axial verschiebbar sind. Dabei wird über den Steuerkolben 6 und den Stößel 7 der Ventilkolben 10 mit seiner Dichtfläche 11 aus dem Dichtsitz 9 herausgedrückt, sodass dann Hydraulikflüssigkeit in den Bereich des Anschlusses 13 gelangen kann. Bei dieser Bewegung, die in der unteren Hälfte der Darstellung nach Figur 1 wiedergegeben ist, wird die Ventilfeder 12 so belastet, dass sie aufgrund ihrer Rückstellkraft dann nach Nachlassen bzw. nach Schließen des Steuerdruckanschlusses 5 den Ventilkolben 10 und über den Stößel 7 auch den Steuerkolben 6 in die in Figur 1 in der oberen Hälfte dargestellten Position zurückdrückt.

Erkennbar ist in Figur 1, dass der mit 5 bezeichnete Steuerdruckanschluss über ein Gewinde 14 verfügt, sodass das entsprechende Bauteil leicht einzubauen ist. Ein ähnlicher Anschluss mit Innengewinde 15 ist auch am gegenüberliegenden Ende der Gehäusebohrung 8 vorgesehen. Hier ist in Figur 1 ein Stopfen 16 dargestellt, über den die Gehäusebohrung 8 auf dieser Seite verschlossen ist. Bei Lösen des Stopfens 16 kann die mit 18 bezeichnete Hülse und auch der Ventilkolben 10 demontiert oder umgekehrt auch montiert werden.

Die den Ventilkolben 10 aufnehmende Hülse 18 verfügt über einen ausreichend tiefen Innenraum 19, in dem der Ventilkolben 10 verschieblich angeordnet ist. In der Kolbenaußenwand 20 ist eine Ringnut 21 angeordnet, in der ein O-Ring 22 untergebracht ist. Dieser O-Ring 22 schleift an der Hülseninnenwand 23 und sorgt dafür, dass der Innenraum 19 der Hülse 18 gegenüber der Gehäusebohrung 8 von dieser Seite her abgedichtet ist.

Im Boden 24 der Hülse 18 ist eine Verbindungsbohrung 25 ausgebildet, die dafür sorgt, dass der Innenraum 19 der Hülse 18 über den Verbindungskanal 37 und den Wasserdurchflussspalt 35 zwischen Innenwand 29 der Gehäusebohrung 8 und der Hülsenwand 28 mit Wasser versorgt wird.

Die Ventilfeder 12 ist so im Innenraum 19 der Hülse 18 angeordnet, dass sie sich auf dem Boden sicher abstützen kann und auf der anderen Seite gegen den Ventilkolben 10. Hierzu verfügt der Ventilkolben 10 über eine Sackbohrung 26, die aber so ausgebildet ist, dass die Ringnut 21 mit dem O-Ring 22 sicher angebracht werden kann. Diese Ringnut 21 ist im engen Abstand zum Kolbenboden 27 angeordnet, um ein Überfahren gegenüber dem Hülsenrand 30 sicher zu vermeiden.

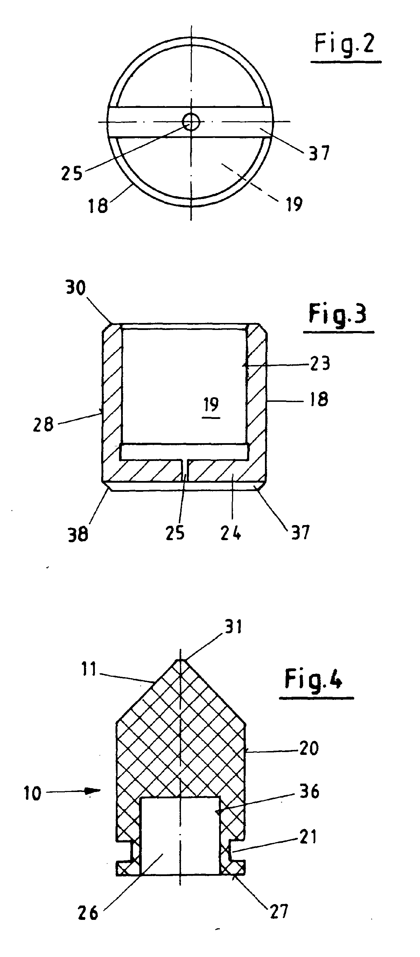

Der Kolben ist wie beschrieben in der aus Messing oder ähnlichem Material bestehenden Hülse 18 verschieblich angeordnet, wobei er an der gegenüberliegenden Kolbenspitze 31 in einer kegelspitzenförmigen Bohrung 32 des Stößels 7 ruht und so geführt ist. Der notwendige sichere Sitz von der Dichtfläche 11 auf dem Dichtsitz 9 der Gehäusebohrung 8 wird dadurch begünstigt, dass im Bereich der äußeren Spitze 31, die, wie Figur 4 zeigt, abgeplattet ist, eine Kurzsackbohrung 33 ausgeformt ist.

Zur Aufnahme der Kolbenspitze 31 verfügt der Stößel 7 über eine Erweiterung 34, die trompetenförmig geformt ist, um die notwendige Wandstärke zu gewährleisten.

Figur 1 verdeutlicht, dass die besondere und beschriebene Ausbildung dieses Rückschlagventils für optimale Standzeiten Sorge trägt.

Figur 2 zeigt eine Hülse 1 vom Boden 24 her, wobei die Verbindungsbohrung 25 erkennbar ist. Diese Verbindungsbohrung 25 endet in dem Verbindungskanal 37, was an Hand der Figur 3 auch noch einmal verdeutlicht wird. Dieser Verbindungskanal 37 läuft quer durch den Boden 24 der Hülse 18, sodass damit sichergestellt ist, dass das Wasser über die Verbindungsbohrung 25 in den Bereich des Wasserdurchflussspaltes 35 gelangt. Die Abschrägung 38 erleichtert nicht nur ein Einsetzen der Hülse 18, sondern begünstigt den "Wasserfluss". Mit 36 ist die Innenwand der Hülse 18 bezeichnet; mit 19 der gesamte Innenraum.

Figur 4 zeigt noch einmal einen Schnitt des Ventilkolbens 10, wobei zunächst einmal erkennbar ist, dass die Kolbenspitze 31 abgeflacht ist, während die durch die besondere Form der Kolbenspitze 31 entstehenden Dichtflächen 11 für das sichere Anliegen an dem Dichtsitz 9 der Gehäusebohrung 8 Sorge tragen.

Der geringe Abstand der Ringnut 21 zum Kolbenboden 27 geht ebenfalls aus Figur 4 deutlich hervor.

Weiter vorn ist erläutert worden, dass die gezielte Undichtigkeit zwischen Innenraum 19 der Hülse 18 und der Gehäusebohrung 8 über den Wasserdurchflussspalt 35 erreicht wird, wobei im Boden 24 der Hülse 18 eine regulierdende Verbindungsbohrung 25 vorgesehen ist. In Fig. 1 ist weiter ein zweiter Wasserdurchflussspalt mit dem Bezugszeichen 41 versehen worden, weil auch hier und dann unter Weglassung der O-Ringe 22 ein Wasserdurchflussspalt 41 zwischen der Hülseninnenwand 23 und der Kolbenaußenwand 20 vorgesehen werden kann.

Alle genannten Merkmale, auch die den Zeichnungen allein zu entnehmenden, werden allein und in Kombination als erfindungswesentlich angesehen.

## Patentansprüche

1. Rückschlagventil, insbesondere für den hydraulischen Ausbau im untertägigen Steinkohlenbergbau mit einem mehrere Anschlüsse (3, 4, 5) aufweisenden Gehäuse (2), in dem ein Steuerkolben (6) und ein axial dazu angeordneter Ventilkolben (10) verschieblich untergebracht sind, wobei der Steuerkolben (6) bei entsprechender Steuerdruckbeaufschlagung den Ventilkolben (10) gegen die Kraft einer Ventilfeder (12) aus dem Dichtsitz (9) herausschiebend ausgebildet ist,
**dadurch gekennzeichnet,**
**dass** der Ventilkolben (10) in einer in der Gehäusebohrung (8) angeordneten Hülse (18) gegen die Kraft der Ventilfeder (12) verschieblich positioniert ist, wobei die Hülse (18) eine Wasserfüllung aufweist und nur eine regulierte Verbindung des Innenraums (19) zur Gehäusebohrung (8) zulassend ausgebildet ist.

2. Rückschlagventil nach Anspruch 1,
**dadurch gekennzeichnet,**
**dass** der Innenraum (19) der Hülse (18) gegenüber der Kolbenaußenwand (20) abgedichtet, gegenüber der Gehäusebohrung (8) aber einen Wasserdurchflussspalt (35) zwischen Hülsenaußenwand (28) und Innenwand (29) der Gehäusebohrung (8) belassend ausgebildet ist und im Boden (24) eine regulierende Verbindungsbohrung (25) aufweist.

3. Rückschlagventil nach Anspruch 1,
**dadurch gekennzeichnet,**
**dass** der Innenraum (19) der Hülse (18) einen geschlossenen Boden (24) aufweist, dafür aber zwischen Kolbenaußenwand (20) und Hülseninnenwand (23) einen Wasserdurchflussspalt (41) belassend ausgebildet ist.

4. Rückschlagventil nach Anspruch 3,
**dadurch gekennzeichnet,**
**dass** der Wasserdurchflussspalt (41) zwischen Kolbenaußenwand (20) und Hülseninnenwand (23) und/oder der Wasserdurchflussspalt (35) und die Verbindungsbohrung (25) vorgesehen sind.

5. Rückschlagventil nach einem der vorhergehenden Ansprüche,
**dadurch gekennzeichnet,**
**dass** das Gehäuse (2) und auch die Hülse (18) aus Messing oder Stahl hergestellt sind und dass der Ventilkolben (10) aus einem korrespondierenden Material besteht.

6. Rückschlagventil nach einem der vorhergehenden Ansprüche,
**dadurch gekennzeichnet,**
**dass** der Ventilkolben (10) als Kunststoffkolben ausgebildet ist.

7. Rückschlagventil nach einem der vorhergehenden Ansprüche,
**dadurch gekennzeichnet,**
**dass** der Ventilkolben (10) mit einer die Ventilfeder (12) teilweise aufnehmenden Sackbohrung (26) ausgerüstet ist.

8. Rückschlagventil nach einem der vorhergehenden Ansprüche,
**dadurch gekennzeichnet,**
**dass** die am Dichtsitz (9) anliegende Dichtfläche (11) des Ventilkolbens (10) spitz zulaufend und in einer kegelspitzenförmigen Bohrung (32) des Ventilkolbens (10) und Steuerkolben (6) verbindenden Stößels (7) geführt ausgebildet ist.

9. Rückschlagventil nach einem der vorhergehenden Ansprüche,
**dadurch gekennzeichnet,**
**dass** die kegelspitzenförmige Bohrung (32) im Stößel (7) in eine Kurzsackbohrung (33) übergehend ausgeführt ist.

10. Rückschlagventil nach einem der vorhergehenden Ansprüche,
**dadurch gekennzeichnet,**
**dass** der Stößel (7) sich im Bereich der kegelspitzenförmigen Bohrung (32) trompetenförmig erweiternd ausgebildet ist.

11. Rückschlagventil nach einem der vorhergehenden Ansprüche,
**dadurch gekennzeichnet,**
**dass** in der Kolbenaußenwand (20) und/oder in der Hülseninnenwand (23) eine einen O-Ring (22) aufnehmende Ringnut (21) ausgebildet ist.

12. Rückschlagventil nach eine der vorhergehenden Ansprüche,
**dadurch gekennzeichnet,**
**dass** die Ringnut (21) zum Kolbenboden (27) mit Sackbohrung (26) des Ventilkolbens (10) hin orientiert angeordnet ist.

13. Rückschlagventil nach einem der vorhergehenden Ansprüche,
**dadurch gekennzeichnet,**
**dass** die Gehäusebohrung (8) hülsenseitig ein Innengewinde (15) für einen Manometeranschluss oder einen Stopfen (16) aufweist.

14. Rückschlagventil nach einem der vorhergehenden Ansprüche,
**dadurch gekennzeichnet,**
**dass** die Verbindungsbohrung (8) in der Hülse (18) einen Durchmesser von 0,6 bis 1,5 mm, vorzugsweise von 1,2 mm aufweist.

15. Rückschlagventil nach einem der vorhergehenden Ansprüche,
**dadurch gekennzeichnet,**
**dass** die Hülsenaußenwand (28) und die Innenwand (29) der Gehäusebohrung (8) einen Wasserdurchflussspalt (35) zulassend zueinander korrespondierend, vorzugsweise unbearbeitet belassen ausgebildet sind.
